# EUROPEAN PATENT SPECIFICATION

(11) **EP 3 675 212 B1**
(45) Date of publication and mention of the grant of the patent: **21.10.2026**
(21) Application number: 19175827.5
(22) Date of filing: 22.05.2019
(51) Int. Cl.: H01M 10/6557, H01M 10/613, H01M 10/647, H01M 50/209, H01M 10/04

(54) **A BATTERY MODULE**
BATTERIEMODUL
MODULE DE BATTERIE

(30) Priority: 30.12.2018 CN 201822274851 U
(43) Date of publication of application: 01.07.2020
(73) Proprietor: Contemporary Amperex Technology (Hong Kong) Limited, Central, Central And Western District (HK)
(72) Inventor: JIN, Haizu, Ningde City, Fujian 352100 (CN); SHI, Dongyang, Ningde City, Fujian 352100 (CN); HU, Fei, Ningde City, Fujian 352100 (CN); YOU, Kaijie, Ningde City, Fujian 352100 (CN); CHEN, Xingdi, Ningde City, Fujian 352100 (CN)
(74) Representative: Ran, Handong

(56) References cited:
- EP-A1- 2 413 421
- WO-A1-2018/062226
- JP-A- 2016 161 158
- KR-A- 20140 007 029
- US-A1- 2003 129 479
- US-A1- 2014 090 812

## Description

### Technical Field

The present invention relates to the technical field of energy storage elements, and more particularly, to a battery module.

### Background Art

In the prior art, in order to dissipate heat from the battery modules in the battery module, a cooling system (e.g., a cooling plate) is provided. However, the cooling plate in the prior art is horizontally disposed, which means that only one surface of the cooling plate can contact the battery modules, so the cooling plate needs to be made large enough to fully contact most of the battery modules in the battery module. When the cooling plate is enlarged, it will occupy more space of the battery module, thereby reducing the energy density of the battery module. In addition, the contact surface of the cooling plate and the contact surface of the battery module may not be absolutely flat due to challenges in the manufacturing process,thus the contact area between the cooling plate and the battery modules is reduced, resulting in smaller heat dissipation area of the battery module and poorer heat dissipation effect of the cooling plate.

Electric storage modules comprising a cooling infrastructure are known e.g. from the following documents: EP 2 413 421 A1 or WO 2018/062226 A1 or JP 2016 161158 A, KR 2014 0007029 A.

The document US 2003/0129479 A1 discloses an electrolytic secondary cell including a plurality of power-generating elements each of which includes a strip-like positive electrode and the strip-like negative electrode wound into an elliptic cylinder with a separator being interposed therebetween, each power-generating element having peripheral face including at least the flat portion, a cell case for housing the power-generating elements, the cell case having an opening, and a cover hermetically sealing the opening of the cell case.

The document US 2014/0090812 A1 discloses a heat exchanger having a first collecting box and having a second collecting box, having at least one tube arranged between the two collecting boxes, wherein the fluid inlet and a fluid outlet are provided which are arranged individually on in each case one of the collecting boxes or on a single one of the collecting boxes, wherein the tube is received at the ends in an opening in each case one of the collecting boxes and is in fluid communication with the collecting boxes, wherein the opening is surrounded by an opening edge whose contour corresponds to the outer contour of the tube, and in that the opening is designed such that the opening cross section narrows toward the interior of the collecting box and the tube can be inserted under preload at the circumference, into the opening.

### Summary

Therefore, a battery module is required for solving the problems such as relatively low energy density of the battery module and poor heat dissipation effect in the prior art.

For the above purposes, there is provided a battery module comprising a first battery group, a second battery group and a cooling plate, wherein the first battery group and the second battery group each include a plurality of battery cells arranged along the horizontal direction and a plurality of busbars electrically connected with said plurality of battery cells; each of the pluralities of battery cells includes an electrode assembly and a cell case, in which the electrode assembly is contained and includes a first electrode plate, a second electrode plate, and a separator disposed therebetween; the electrode assemblies are of a flat wound configuration, and the outer surface of which includes two flat sides facing each other along the vertical direction; or the electrode assemblies are of a laminated configuration, in which the first electrode plate, the separator and the second electrode plate are laminated along the vertical direction; the cooling plate is vertically disposed and located between the first battery group and the second battery group, and two surfaces of which are respectively bonded onto the first battery group and the second battery group with thermally conductive adhesive;
at least three fluid passages are provided in the interior of the cooling plate, which extend along the horizontal direction with inlet and outlet located at the same end of the cooling plate along the horizontal direction;
the at least three fluid passages are arranged side by side along the vertical direction;
and wherein the cooling plate comprises a guide plate, in which the three or more of the fluid passages are arranged side by side along the vertical direction and penetrate the guide plate along the horizontal direction; a collecting tail plate, which is disposed at an end of the guide plate away from the inlet and has a collecting trough connected with the at least three fluid passages, so as to establish the connection between the inlet and the outlet; and a joint end plate, which has an inlet joint and an outlet joint arranged side by side along the vertical direction, and is connected with the guide plate, with the inlet mated with the inlet joint and the outlet mated with the outlet joint, wherein the inlet joint is arranged above the outlet joint.

Preferably, the battery cells have a plurality of electrode assemblies which are stacked along the vertical direction.

Preferably, the number of layers of said battery cells stacked along the vertical direction in the first battery group is 1~5; and/or the number of layers of said battery cells stacked along the vertical direction in the second battery group is 1~5.

Preferably, the dimension of both the first battery group and the second battery group along the horizontal direction is larger than the dimension along the vertical direction.

Preferably, the thermally conductive adhesive is a type of structural adhesive with a thickness is 0.5 mm~20 mm.

Preferably, the battery module further comprises a conveying pipe coupled to the inlet joint of the joint end plate so as to establish the connection between the conveying pipe and the inlet.

Preferably, the battery module further comprises a return pipe coupled to the outlet joint of the joint end plate so as to establish the connection between the return pipe and the inlet.

Unlike the prior art, the above technical solution is mainly characterized in that a cooling plate is arranged between and shared by two battery modules, so as to make full use of the effect of the cooling plate while maintaining an equivalent or nearly equivalent cooling effect for the battery cells. Specifically, each battery cell in the battery module is laid flat so that, when the electrode assemblies are of a flat wound configuration, the outer surfaces of the electrode assemblies include two flat sides facing each other along the vertical direction; or, when the electrode assemblies are of a laminated configuration, the first electrode plate, the separator and the second electrode plate are laminated along the vertical direction. Additionally, since the cooling plate is placed between the first battery group and the second battery group, and the two surfaces of the cooling plate are respectively bonded onto the first battery group and the second battery group with thermally conductive adhesive, the first battery group and the second battery group can be mounted close to the cooling plate, thus increasing the heat dissipation area and improving the heat dissipation effect.

### Brief Description of the Drawings

Fig 1 illustrates a schematic diagram of a battery module of the present invention;
Fig 2 illustrates a structural view of a battery module of the present invention;
Fig 3 illustrates a schematic diagram of a battery module of the present invention with busbars;
Fig 4 illustrates an exploded view of a battery module of the present invention;
Fig 5 illustrates a sectional view of the wound battery cells in a battery module of the present invention;
Fig 6 illustrates a sectional view of the laminated battery cells in a battery module of the present invention;
Fig 7 illustrates an exploded view of the cooling plate in a battery module of the present invention;
Fig 8 illustrates an exploded view of a part of the cooling plate in a battery module of the present invention;

### Description of drawing reference signs:

1 First battery group;
11 Battery cell;
12 Busbar;
11a Wound electrode assembly; 11b Laminated electrode assembly;
111 Electrode assembly;
112 Cell case;
113 Electrode terminal connector;
114 Cover plate;
1110 Flat side;
1111 First electrode plate;
1112 Second electrode plate;
1113 Separator;
1121 First surface;
1122 Second surface;
2 Second battery group;
3 Cooling plate;
31 Fluid passage;
32 Water defector;
33 Joint end plate;
34 Collecting tail plate;
311 Inlet;
312 Outlet;
331 Inlet joint;
332 Outlet joint;
341 Collecting trough;
4 Thermally conductive adhesive;
5 Conveying pipe;
6 Return pipe;

### Detailed Description of the Preferred Embodiments

Example embodiments will now be described in detail hereinafter with reference to the accompanying drawings in order to fully explain the technical content, structural features, purposes and effects of the present present invention.

Unless otherwise expressly stated and defined, the terms "first" and "second" in this application are only used for description, and should not be construed as indicating or implying the relative importance; the term "a plurality of" means two or more; and the terms "connection" and "fixation" should be construed in a broad sense. For example, "connection" may be fixed connection, removable connection, integral connection, or electrical connection; also, it may be direct connection or indirect connection through an intermediary. For those skilled in the art, the specific meanings of the above terms in the present application can be understood on a case-by-case basis.

In the present application, the direction indicated by the arrow X in all the drawings means the length direction, the direction indicated by the arrow Y means the width direction, and the direction indicated by the arrow Z means the vertical direction. The horizontal direction means the direction parallel to the horizontal plane, and may be said length or width direction. In addition, the horizontal direction includes not only the direction absolutely parallel to the horizontal plane but also the direction generally parallel to the horizontal plane according to conventional engineering cognition. The vertical direction means the direction perpendicular to the horizontal plane, and includes not only the direction absolutely perpendicular to the horizontal plane but also the direction generally perpendicular to the horizontal plane according to conventional engineering cognition. Moreover, "upper", "lower", "top", "bottom" and the like described in this application are expressed relative to the vertical direction. For the convenience of understanding and explanation, the directions will be described hereinafter based on the X-Y-Z coordinate system in the drawings.

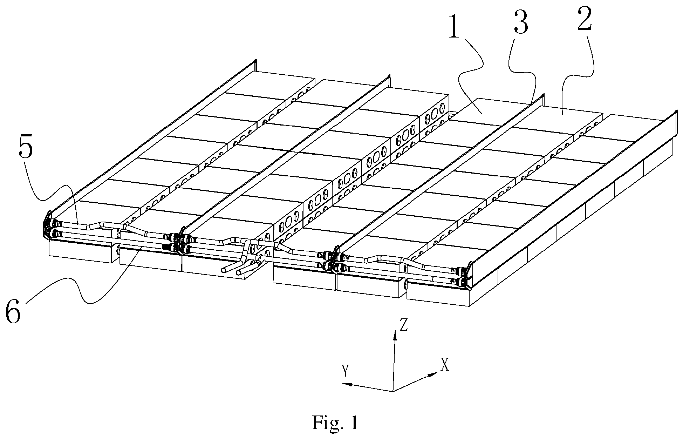

With reference to Fig. 1 to Fig. 8, the present invention provides a battery module comprising a first battery group 1, a second battery group 2, a cooling plate 3, thermal conductive adhesive 4, a conveying pipe 5, and a return pipe 6. As shown in Fig. 1, the cooling plate 3 is arranged between the first battery group 1 and the second battery group 2, and a plurality of groups of the first battery group 1, the second battery group 2, and the cooling plate are arranged along the Y-axis direction in the coordinate system in Fig. 1, and are connected to the cooling plate 3 via the conveying pipe 5 and the return pipe 6. The conveying pipe 5 conveys the cooling medium to the cooling plate 3, while the cooling medium outputted by the cooling plate 3 is recovered through the return pipe, and then cooled and re-input into the conveying pipe 5, forming a loop among the conveying pipe 5, the cooling plate 3 and the return pipe 6, which enables continuous cooling of the battery module and increases the cooling efficiency.

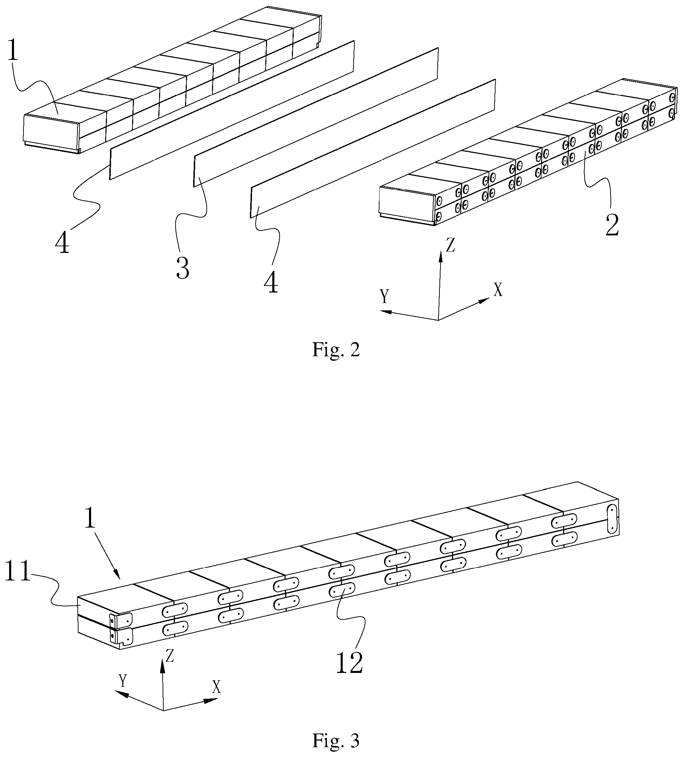

As shown in Fig. 2, the first battery group 1 is bonded onto one side of the cooling plate 3 with the thermal conductive adhesive 4, while the second battery group 2 is bonded onto the other side of the cooling plate 3 with the thermal conductive adhesive 4. A plurality of battery cells 11 are arranged along the horizontal direction (e.g., X-axis direction) of the first battery group 1, and may also be stacked layer by layer along the vertical direction (Z-axis direction), and the battery cells 11 stacked in the battery module 1 are electrically connected through a plurality of busbars 12 (as shown in Fig. 3). The second battery group 2 may be the same as the first battery group 1. Preferably, the dimension of the second battery group 2 along the horizontal direction is the same as that of the first battery group 1 along the horizontal direction, which means that the layers of the battery cells 11 stacked along the X-axis direction in the second battery group 2 and the first battery group 1 are the same. Preferably, the dimension of the second battery group 2 along the vertical direction is the same as that of the first battery group 1 along the vertical direction, which means that the layers of the battery cells 11 stacked along the Z-axis direction in the second battery group 2 and the first battery group 1 are the same. The cooling plate 3 is vertically disposed, i.e. extending along the vertical direction (e.g., Z-axis direction). Both surfaces of the cooling plate 3 are provided with thermal conductive adhesive 4, and respectively bonded onto the first battery group 1 and the second battery group 2 with the thermal conductive adhesive 4.

In the present embodiment, both the first battery group 1 and the second battery group 2 may be stacked along the vertical direction (Z-axis direction) by 1-5 layers, preferably 2 or 3 layers. As shown in Fig. 2, both the first battery group 1 and the second battery group 2 are stacked along the vertical direction (Z-axis direction) by 2 layers. The length of the first battery group 1 stacked along the X-axis direction is greater than that of the first battery group 1 stacked along the Z-axis direction. The length of the second battery group 2 stacked along the X-axis direction is greater than that of the second battery group 2 stacked along the Z-axis direction.

As shown in Fig. 2, the thickness of the thermally conductive adhesive 4 coated between the battery modules and the cooling plate 3 may be 0.5 mm~20 mm (0.5 mm and 20 mm inclusive). Within the above-mentioned thickness range, the thermally conductive adhesive 4 can achieve better bonding effect between the battery modules and the cooling plate 3, and the solidified thermally conductive adhesive 4 will not form a thicker adhesive layer, thus significantly reducing waste and impact on the energy density of the whole battery module and the cooling effect of the cooling plate 3. The thermally conductive adhesive 4 may be a type of structural adhesive.

The cooling plate 3 may not be absolutely flat due to challenges in the manufacturing process. Without the thermally conductive adhesive 4, the cooling plate 3 cannot be effectively bonded onto the first battery group 1, which will result in a small contact area and also a small heat transfer area. With the thermal conductive adhesive 4, the gap between the cooling plate 3 and the first battery group 1 and the gap between the cooling plate 3 and the second battery group 2 can be filled, thereby increasing the heat transfer area and improving the thermal conduction effect.

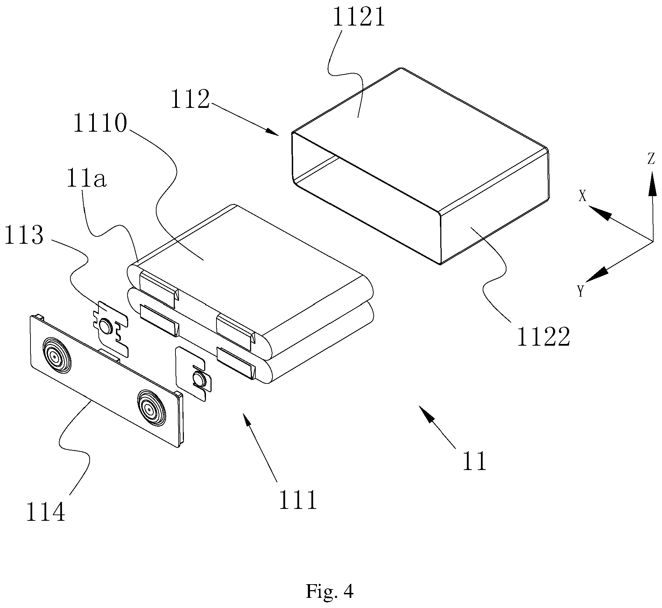

As shown in Fig.2, the electrode assemblies 111 of the first battery group 1 and the second battery group 2 are laid flat so that, when the electrode assemblies 111 are of a flat wound configuration, the outer surfaces of the electrode assemblies 111 include two flat sides 1110 (as shown in Fig.4) facing each other along the vertical direction; or, when the electrode assemblies 111 are of a laminated configuration, the first electrode plate 1111, the separator 1113 and the second electrode plate 1112 are laminated along the vertical direction. When the electrode assemblies 111 of the battery cell 11 expand, the maximum expansion force appears in the vertical direction. However, since the electrode assemblies 111 of the battery cell 11 are vertically arranged in the prior art, when the electrode assemblies 111 expand, the maximum expansion force appears in the horizontal direction.

As shown in Fig. 4, the battery cell 11 includes electrode assemblies 111, a cell case 112, electrode terminal connectors 113, and a cover plate 114. In the embodiment shown in Fig. 4, the cell case 112 is rectangular (hexahedron). The cell case 112 has an inner space accommodating the electrode assemblies 111 and electrolyte. In addition, the cell case 112 also has an opening. The electrode assemblies 111 are contained in the cell case 112; the cover plate 114 covers the opening, and is intended for enclosing the electrode assemblies 111 in the cell case 112; and the electrode assemblies 111 and the electrode terminals are electrically connected by the electrode terminal connectors 113. In this embodiment, there are two electrode terminal connectors 113, which are the positive terminal connector and the negative terminal connector,respectively. The cell case 112 may be made of aluminum, aluminum alloy or plastic materials.

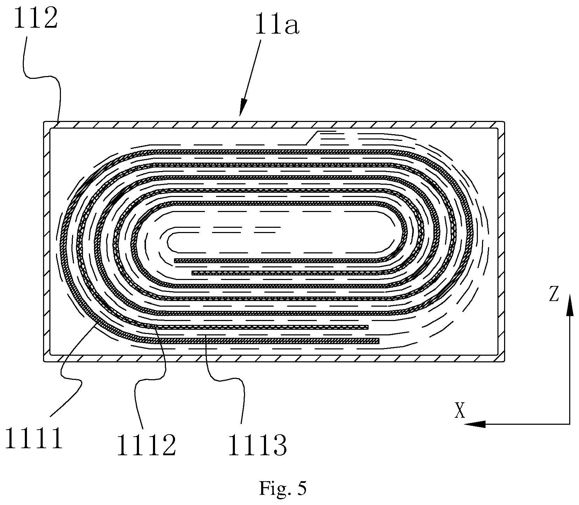

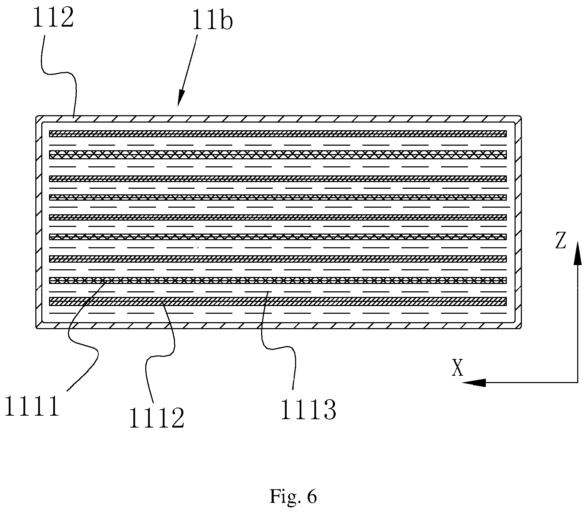

The electrode assemblies 111 are contained in the cell case 112, which includes a first electrode plate 1111, a second electrode plate 1112, and a separator 1113 interposed therebetween. The first electrode plate 1111 may be positive or negative, and the second electrode plate 1112 is opposite in polarity to the first electrode plate 1111, which mean that the second electrode plate 1112 is negative or positive accordingly. The separator 1113 is an insulator interposed between the first electrode plate 1111 and the second electrode plate 1112. The electrode assemblies 111 may be of a wound configuration (as shown in Fig. 5) or a laminated configuration (as shown in Fig. 6).

In the embodiment, the first electrode plate 1111 is positive, while the second electrode plate 1112 is negative. Similarly, in other embodiments, the first electrode plate 1111 may be negative while the second electrode plate 1112 may be positive. Furthermore, the positive electrode active mass is applied onto the coating area of the positive electrode plate, and the negative electrode active mass is applied onto the coating area of the negative electrode plate. The uncoated area extending from the coating area functions as an electrode tab, and the electrode assemblies 111 include two electrode tabs, i.e. a positive electrode tab and a negative electrode tab, wherein the positive electrode tab extends from the coating area of the positive electrode plate, while the negative electrode tab extends from the coating area of the negative electrode plate. The positive electrode tab and the positive electrode terminal are electrically connected by the positive terminal connector, while the negative electrode tab and the negative electrode terminal are electrically connected by the negative terminal connector.

The cell case 112 is substantially hexahedral, and includes two first surfaces 1121 and two second surfaces 1122, wherein the area of the first surfaces 1121 is larger than that of the second surfaces 1122. In each battery cell 11, the two second surfaces 1122 face each other along the horizontal direction (e.g. X-axis direction), while the two first surfaces 1121 face each other along the vertical direction (Z-axis direction).

As shown in Fig. 5 and Fig. 6, when the electrode assemblies 111 are of a flat wound configuration, and the outer surfaces of the electrode assemblies 111 include two flat sides 1110 facing each other along the vertical direction (Z-axis direction), i.e. the flat sides 1110 and the first surfaces 1121 face each other. The electrode assemblies 111 are substantially hexahedral, and the flat sides 1110 are substantially parallel to the winding axis and are the largest outer surface.

As shown in Fig. 6, when the electrode assemblies 111 are of a laminated configuration, the first electrode plate 1111, the separator 1113, and the second electrode plate 1112 are stacked along the vertical direction, i.e. the surface of the first electrode plate 1111 and the first surface 1121 face each other.

Inevitably, the electrode assemblies 111 expand in the thickness direction of the first electrode plate 1111 during charging and discharging process(in the electrode assemblies 111 of a wound configuration, the expansion force is the largest in the direction perpendicular to the flat side 1110; while in the electrode assemblies 111 of a laminated configuration, the expansion force is the largest along the stacking direction of the first electrode plate 1111 and the second electrode plate 1112.)

In this embodiment, the electrode assemblies 111 may employ a wound or laminated configuration. When the electrode assemblies 111 are of a wound configuration, the flat sides 1110 of the electrode assemblies 111 face the vertical direction (Z-axis direction). When the electrode assemblies 111 are of a laminated configuration, the first electrode plates 1111 and the second electrode plates 1112 of the electrode assemblies 111 are stacked in the vertical direction (Z-axis direction). It can be seen that whether the electrode assemblies 111 employ a wound configuration or a laminated configuration, the direction of the maximum expansion force exerted by the electrode assemblies 111 on the cell case 112 is vertical.

In the prior art, in the battery cells 11 of the battery modules, the direction of the maximum expansion force exerted by the electrode assemblies on the cell case 112 is horizontal. Since the dimension of the battery module 2 along the horizontal direction is much larger than that along the vertical direction (e.g., limited by the height of the vehicle chassis, it is required that more battery cells 11 should be stacked along the horizontal direction, thus the expansion force accumulates), the battery module 2 in the prior art bears quite a big expansion force in the horizontal direction. In turn, very thick end plates are required on both sides of the battery module along the horizontal direction to resist the expansion force,resulting in the reduction of the energy density of the battery module. In this embodiment, since the direction of the maximum expansion force exerted by the electrode assemblies on the cell case 112 is vertical, and the number of the battery cells 11 stacked along the vertical direction is small, the maximum expansion force of the battery modules can be greatly reduced compared with the prior art.

The battery cells 11 may have a plurality of electrode assemblies 111 which are stacked along the vertical direction (Z-axis direction). Specifically, there are two electrode assemblies 111, as shown in Fig. 4. The two electrode assemblies 111 are stacked along the vertical direction (Z-axis direction), whose positive and negative electrode tabs are separately connected, so that the two stacked electrode assemblies 111 are contained in the cell case 112.

Specifically, in the battery cells 11 of the battery modules in the prior art, the direction of the maximum expansion force exerted by the electrode assemblies 111 on the cell case 112 is always horizontal. The battery modules in the prior art bear quite a big expansion force in the horizontal direction, since the dimension of the battery modules along the horizontal direction is much larger than that along the vertical direction (e.g., limited by the height of the vehicle chassis , it is required that more battery cells 11 should be stacked along the horizontal direction, thus the expansion force accumulates). In this embodiment, since the direction of the maximum expansion force exerted by the electrode assemblies on the cell case 112 is vertical, and the number of the battery cells 11 stacked along the vertical direction is small, the influence of the maximum expansion force of the battery cells 11 on the battery module is small or negligible, compared to the prior art.

In addition, since the battery cells 11 generate gases inside the cell case 112 during charging and discharging, the generated gases impose a force on the cell case 112, thereby exacerbating the outward expansion of the cell case 112. Since the battery cells 11 described in the present application are laid flat, the area of the first surfaces 1121 is larger than that of the second surfaces 1122, and the two first surfaces 1121 of the battery cells 11 face each other along the vertical direction, the direction of the maximum force exerted by the gases on the cell case 112 is also vertical, which further reduces the maximum expansion force of the battery modules compared to the prior art.

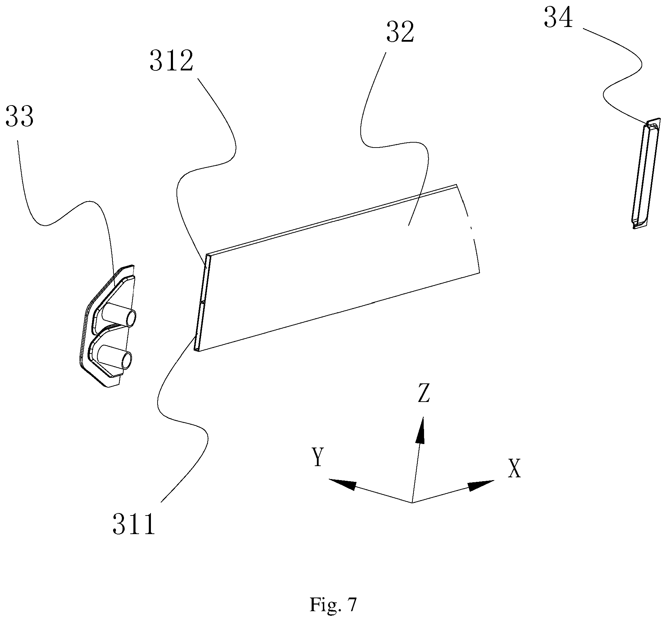

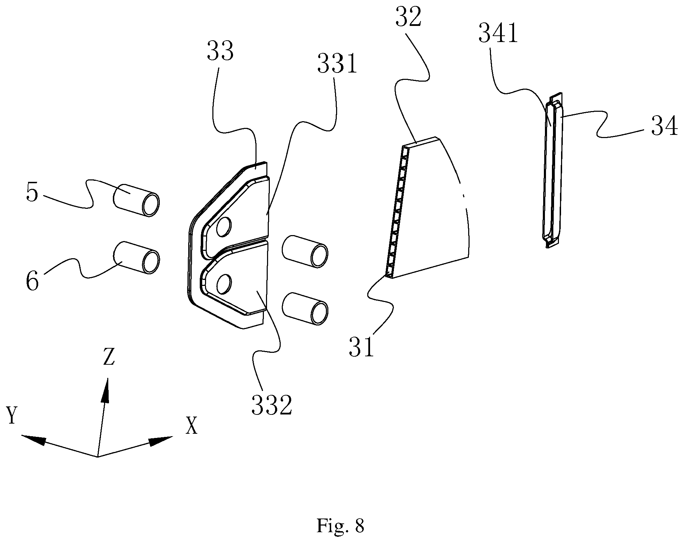

As shown in Fig. 7, the cooling plate 3 extends along the vertical direction (e.g., Z-axis direction). As shown in Fig. 7 and Fig. 8, the fluid passage 31 in the cooling plate 3 is disposed along the horizontal direction (e.g., X-axis direction). Therefore, the cooling medium is input through the inlet 311 of the fluid passage 31 to cool the battery modules on both sides. After passing through the fluid passage 31, the cooling medium is outputted from the outlet 312 of the fluid passage 31, forming continuous supply of the cooling medium, and maintaining the cooling effect and efficiency. The cooling medium may be a cooling liquid (e.g., cooling water) or a cooling gas.

In addition, since the inlet 311 and the outlet 312 of the fluid passage 31 are arranged at the same end of the cooling plate 3, the cooling medium can be evenly distributed in the cooling plate 3, which guarantees a relatively small difference in the temperature of the cooling medium at both ends of the cooling plate 3, and improves the cooling effect of the cooling plate 3.

According to the invention, in order to facilitate uniform distribution of the cooling medium in the cooling plate 3, three or more fluid passages 31 are provided in the cooling plate 3 along the vertical direction (e.g., Z-axis direction), which increases the volume ratio of the fluid passages 31 in the cooling plate 3. Thus the conveying amount of the cooling medium is increased, the cooling medium is more evenly distributed in the cooling plate 3, and the cooling effect of the cooling plate 3 is improved.

As shown in Fig. 7 and Fig. 8, the cooling plate 3 can be divided into three parts, namely, a guide plate 32, a joint end plate 33, and a collecting tail plate 34. The cooling plate 3 can be made of aluminum, aluminum alloy, magnesium aluminum alloy, steel, or the like, so that the three parts of the cooling plate 3 can be joined by welding.

Specifically, three or more fluid passages 31 are disposed along the vertical direction (e.g., Z-axis direction) in the guide plate 32, and penetrate both ends of the guide plate 32, which means that fluid passages 31 are arranged in a horizontal line at same intervals in the entire guide plate 32, so that the cooling medium can be evenly distributed in the fluid passages 31 to achieve a good cooling effect. In order to allow the cooling medium to return when it flows to the end of the guide plate 32, the collecting tail plate 34 is welded at the end of the guide plate 32, in which a collecting trough is formed. The collecting trough connects all the fluid passages 31 of the guide plate 32 to achieve the purpose of guiding the cooling medium to rotate 180 degrees.

As shown in Fig. 8, the inlet joint 331 and the outlet joint 332 are disposed on the joint end plate 33 along the vertical direction (e.g., Z-axis direction), wherein the inlet joint 331 may be arranged above or below the outlet joint 332. According to the invention, the inlet joint 331 is arranged above the outlet joint 332 so that when the cooling medium returns from the collecting tail plate 34, it can flow into the fluid passages 31 of the guide plate 32 by gravity, and then flows out through the outlet joint 332 to continuously cool the battery modules bonded on both sides of the cooling plate 3. Because the guide plate 32 has more than three fluid passages 31, the cooling medium can be evenly distributed in the guide plate 32, thus the situation of absence of the cooling medium at the top of the fluid passages 31 due to gravity is avoided, and both the cooling efficiency and cooling effect of the cooling plate 3 are improved.

## Claims

1. A battery module comprising a first battery group (1), a second battery group (2) and a cooling plate (3); wherein
the first battery group (1) and the second battery group (2) each includes a plurality of battery cells (11) arranged along a horizontal direction and a plurality of busbars (12) electrically connected with the plurality of battery cells (11); each of the plurality of battery cells (11) includes an electrode assembly (111) and a cell case (112), in which the electrode assembly (111) is contained and includes a first electrode plate (1111), a second electrode plate (1112), and a separator (1113) disposed therebetween;
the electrode assembly (111) is of a flat wound configuration, and outer surfaces of the electrode assembly (111) include two flat sides (1110) facing each other along a vertical direction; or the electrode assembly (111) is of a laminated configuration, in which the first electrode plate (1111), the separator (1113) and the second electrode plate (1112) are laminated along a vertical direction;
the cooling plate (3) is vertically disposed and located between the first battery group (1) and the second battery group (2), two surfaces of the cooling plate (3) are respectively bonded onto the first battery group (1) and the second battery group (2) with thermally conductive adhesive (4),
at least three fluid passages (31) are provided in a interior of the cooling plate (3), the fluid passages (31) extend along the horizontal direction and are arranged side by side along the vertical direction, an inlet (311) of the fluid passages (31) and an outlet (312) of the fluid passages (31) are located at the same end of the cooling plate (3) along the horizontal direction,
and wherein the cooling plate (3) comprises:
a guide plate (32), in which the at least three fluid passages (31) are provided in the interior of the cooling plate (3) and arranged side by side along the vertical direction, and the at least three fluid passages (31) penetrate the guide plate (32) along the horizontal direction;
a collecting tail plate (34), which is disposed at an end of the guide plate (32) away from the inlet (311) and provided with a collecting trough (341), the collecting trough (341) is connected with the at least three fluid passage (31), so as to establish a connection between the inlet (311) and the outlet (312);
a joint end plate (33), which includes an inlet joint (331) and an outlet joint (332) arranged side by side along the vertical direction, and is connected with the guide plate (32), the inlet (311) is mated with the inlet joint (331) and the outlet (312) is mated with the outlet joint (332), wherein the inlet joint (331) is arranged above the outlet joint (332).

2. The battery module according to claim 1, wherein each of the plurality of battery cells (11) comprises a plurality of electrode assemblies (111) being stacked along the vertical direction.

3. The battery module according to any one of claims 1 or 2, wherein the number of layers of said battery cells (11) stacked along the vertical direction in the first battery group (1) is 1~5; and/or
the number of layers of said battery cells (11) stacked along the vertical direction in the second battery group (2) is 1~5.

4. The battery module according to any one of claims 1 to 3, wherein a dimension of the first battery group (1) along the horizontal direction is larger than a dimension of the first battery group (1) along the vertical dimension, and a dimension of the second battery group (2) along the horizontal direction is larger than a dimension of the second battery group (2) along the vertical dimension.

5. The battery module according to any one of claims 1 to 4, wherein the thermally conductive adhesive (4) is a type of structural adhesive with a thickness of 0.5 mm~20 mm.

6. The battery module according to claims 1 to 5, further comprising a conveying pipe (5) coupled to the inlet joint (331) of the joint end plate (33) so as to establish a connection between the conveying pipe (5) and the inlet (311).

7. The battery module according to any one of claims 1 to 6, further comprising a return pipe (6) coupled to the outlet joint (332) of the joint end plate (33) so as to establish a connection between the return pipe (6) and the outlet (312).

## Patentansprüche

1. Batteriemodul, umfassend eine erste Batteriegruppe (1), eine zweite Batteriegruppe (2) und eine Kühlplatte (3); wobei
die erste Batteriegruppe (1) und die zweite Batteriegruppe (2) jeweils eine Vielzahl von entlang einer horizontalen Richtung angeordneten Batteriezellen (11) und eine Vielzahl von Sammelschienen (12) einschließen, die elektrisch mit der Vielzahl von Batteriezellen (11) verbunden sind; jede der Vielzahl von Batteriezellen (11) eine Elektrodenanordnung (111) und ein Zellgehäuse (112) einschließt, in dem die Elektrodenanordnung (111) enthalten ist und eine erste Elektrodenplatte (1111), eine zweite Elektrodenplatte (1112) sowie einen dazwischen angeordneten Separator (1113) einschließt;
die Elektrodenanordnung (111) eine flachgewickelte Konfiguration aufweist, und Außenoberflächen der Elektrodenanordnung (111) zwei flache Seiten (1110) einschließen, die einander entlang einer vertikalen Richtung zugewandt sind; oder die Elektrodenanordnung (111) eine laminierte Konfiguration aufweist, bei der die erste Elektrodenplatte (1111), der Separator (1113) und die zweite Elektrodenplatte (1112) entlang einer vertikalen Richtung laminiert sind;
die Kühlplatte (3) vertikal angeordnet ist und sich zwischen der ersten Batteriegruppe (1) und der zweiten Batteriegruppe (2) befindet, zwei Oberflächen der Kühlplatte (3) jeweils mit wärmeleitendem Klebstoff (4) an die erste Batteriegruppe (1) und die zweite Batteriegruppe (2) gebondet sind,
mindestens drei Fluiddurchgänge (31) in einem Inneren der Kühlplatte (3) bereitgestellt sind, die Fluiddurchgänge (31) sich entlang der horizontalen Richtung erstrecken und entlang der vertikalen Richtung nebeneinander angeordnet sind; ein Einlass (311) der Fluiddurchgänge (31) und ein Auslass (312) der Fluiddurchgänge (31) sich entlang der horizontalen Richtung am selben Ende der Kühlplatte (3) befinden,
und wobei die Kühlplatte (3) Folgendes umfasst:
eine Führungsplatte (32), in der die mindestens drei Fluiddurchgänge (31) im Inneren der Kühlplatte (3) bereitgestellt und entlang der vertikalen Richtung nebeneinander angeordnet sind, und die mindestens drei Fluiddurchgänge (31) die Führungsplatte (32) entlang der horizontalen Richtung durchdringen;
eine Sammelschlussplatte (34), die an einem Ende der Führungsplatte (32), das von dem Einlass (311) abgewandt ist, angeordnet und mit einer Sammelmulde (341) versehen ist, wobei die Sammelmulde (341) so mit den mindestens drei Fluiddurchgängen (31) verbunden ist, dass eine Verbindung zwischen dem Einlass (311) und dem Auslass (312) hergestellt wird;
eine Verbindungsendplatte (33), die einen Einlassanschluss (331) und einen Auslassanschluss (332) einschließt, die nebeneinander entlang der vertikalen Richtung angeordnet sind, und die mit der Führungsplatte (32) verbunden ist, wobei der Einlass (311) zu dem Einlassanschluss (331) passt und der Auslass (312) zu dem Auslassanschluss (332) passt, wobei der Einlassanschluss (331) über dem Auslassanschluss (332) angeordnet ist.

2. Batteriemodul nach Anspruch 1, wobei jede der Vielzahl von Batteriezellen (11) eine Vielzahl von Elektrodenbaugruppen (111) umfasst, die entlang der vertikalen Richtung gestapelt sind.

3. Batteriemodul nach einem der Ansprüche 1 oder 2, wobei die Anzahl der Schichten der entlang der vertikalen Richtung gestapelten Batteriezellen (11) in der ersten Batteriegruppe (1) 1~5 beträgt; und/oder
die Anzahl der Schichten der entlang der vertikalen Richtung gestapelten Batteriezellen (11) in der zweiten Batteriegruppe (2) 1~5 beträgt.

4. Batteriemodul nach einem der Ansprüche 1 bis 3, wobei eine Abmessung der ersten Batteriegruppe (1) entlang der horizontalen Richtung größer ist als eine Abmessung der ersten Batteriegruppe (1) entlang der vertikalen Richtung, und eine Abmessung der zweiten Batteriegruppe (2) entlang der horizontalen Richtung größer ist als eine Abmessung der zweiten Batteriegruppe (2) entlang der vertikalen Richtung.

5. Batteriemodul nach einem der Ansprüche 1 bis 4, wobei der wärmeleitende Klebstoff (4) ein Strukturklebstoff mit einer Dicke von 0,5 mm~20 mm ist.

6. Batteriemodul nach den Ansprüchen 1 bis 5, ferner umfassend ein Förderrohr (5), das so mit dem Einlassanschluss (331) der Verbindungsendplatte (33) gekoppelt ist, dass eine Verbindung zwischen dem Förderrohr (5) und dem Einlass (311) hergestellt wird.

7. Batteriemodul nach einem der Ansprüche 1 bis 6, ferner umfassend ein Rücklaufrohr (6), das so mit dem Auslassanschluss (332) der Verbindungsendplatte (33) gekoppelt ist, dass eine Verbindung zwischen dem Rücklaufrohr (6) und dem Auslass (312) hergestellt wird.

## Revendications

1. Module de batterie comprenant un premier groupe de batteries (1), un deuxième groupe de batteries (2) et une plaque de refroidissement (3) ; dans lequel
le premier groupe de batteries (1) et le deuxième groupe de batteries (2) comprennent chacun une pluralité de cellules de batterie (11) agencées le long d'une direction horizontale et une pluralité de barres omnibus (12) électriquement raccordées à la pluralité de cellules de batterie (11) ; chacune de la pluralité de cellules de batterie (11) inclut un ensemble électrode (111) et un boîtier de cellule (112), dans lequel l'ensemble électrode (111) est contenu et inclut une première plaque d'électrode (1111), une deuxième plaque d'électrode (1112), et un séparateur (1113) disposé entre elles ;
l'ensemble électrode (111) a une structure enroulée plate, et des surfaces externes de l'ensemble électrode (111) incluent deux côtés plats (1110) se faisant face le long d'une direction verticale ; ou l'ensemble électrode (111) a une configuration stratifiée, dans laquelle la première plaque d'électrode (1111), le séparateur (1113), et la deuxième plaque d'électrode (1112) sont stratifiées le long d'une direction verticale ;
la plaque de refroidissement (3) est disposée verticalement et située entre le premier groupe de batteries (1) et le deuxième groupe de batteries (2), deux surfaces de la plaque de refroidissement (3) sont respectivement liées au premier groupe de batteries (1) et au deuxième groupe de batteries (2) avec un adhésif thermoconducteur (4),
au moins trois passages de fluide (31) sont ménagés dans un intérieur de la plaque de refroidissement (3), les passages de fluide (31) s'étendent le long de la direction horizontale et sont agencés côte à côte le long de la direction verticale, une entrée (311) des passages de fluide (31) et une sortie (312) des passages de fluide (31) sont situées au niveau de la même extrémité de la plaque de refroidissement (3) le long de la direction horizontale,
et dans lequel la plaque de refroidissement (3) comprend :
une plaque de guidage (32), dans laquelle au moins trois passages de fluide (31) sont ménagés dans l'intérieur de la plaque de refroidissement (3) et agencés côte à côte le long de la direction verticale, et les au moins trois passages de fluide (31) pénètrent la plaque de guidage (32) le long de la direction horizontale ;
une plaque de queue de collecte (34), qui est disposée au niveau d'une extrémité de la plaque de guidage (32) à distance de l'entrée (311) et pourvue d'une goulotte de collecte (341), la goulotte de collecte (341) est raccordée aux au moins trois passages de fluide (31), de sorte à établir un raccordement entre l'entrée (311) et la sortie (312) ;
une plaque d'extrémité de jonction (33), qui inclut une jonction d'entrée (331) et une jonction de sortie (332) agencés côte à côte le long de la direction verticale, et est raccordée à la plaque de guidage (32), l'entrée (311) est associée à la jonction d'entrée (331) et la sortie (312) est associée à la jonction de sortie (332), la jonction d'entrée (331) étant agencée au-dessus de la jonction de sortie (332).

2. Module de batterie selon la revendication 1, dans lequel chacune de la pluralité de cellules de batterie (11) comprend une pluralité d'ensembles électrode (111) qui sont empilés le long de la direction verticale.

3. Module de batterie selon l'une quelconque des revendications 1 ou 2, dans lequel le nombre de couche desdites cellules de batterie (11) empilées le long de la direction verticale dans le premier groupe de batteries (1) est de 1~5 ; et/ou
le nombre de couche desdites cellules de batterie (11) empilées le long de la direction verticale dans le deuxième groupe de batteries (2) est de 1~5.

4. Module de batterie selon l'une quelconque des revendications 1 à 3, dans lequel une dimension du premier groupe de batteries (1) le long de la direction horizontale est plus grande qu'une dimension du premier groupe de batteries (1) le long de la dimension verticale, et une dimension du deuxième groupe de batteries (2) le long de la direction horizontale est plus grande qu'une dimension du deuxième groupe de batteries (2) le long de la dimension verticale.

5. Module de batterie selon l'une quelconque des revendications 1 à 4, dans lequel l'adhésif thermoconducteur (4) est un type d'adhésif structural ayant une épaisseur de 0,5 mm~20 mm.

6. Module de batterie selon les revendications 1 à 5, comprenant en outre un tuyau de transport (5) accouplé à la jonction d'entrée (331) de la plaque d'extrémité de jonction (33) de sorte à établir une connexion entre le tuyau de transport (5) et l'entrée (311).

7. Module de batterie selon l'une quelconque des revendications 1 à 6, comprenant en outre un tuyau de retour (6) accouplé à la jonction de sortie (332) de la plaque d'extrémité de jonction (33) de sorte à établir une connexion entre le tuyau de retour (6) et la sortie (312).
